# EUROPEAN PATENT APPLICATION

(11) **EP 4 142 103 A1**
(43) Date of publication of application: **01.03.2023**
(21) Application number: 22191543.2
(22) Date of filing: 22.08.2022
(51) Int. Cl.: H02J 7/00, H02J 50/00

(54) **MOBILE TERMINAL HOLDER STRUCTURE**

(30) Priority: 24.08.2021 JP 2021136623
(71) Applicant: TOYOTA JIDOSHA KABUSHIKI KAISHA, Toyota-shi, Aichi-ken 471-8571 (JP)
(72) Inventor: OTAKE, Masatoshi, Toyota-shi, Aichi-ken 471-8571 (JP); YOSHIDA, Keigo, Toyota-shi, Aichi-ken 471-8571 (JP)
(74) Representative: Cabinet Beau de Loménie

(57) **Abstract**

A mobile terminal holder structure (20) includes a wireless charging face (26a) disposed upright substantially normal to a vehicle length direction, and a pair of retainers (28) horizontally spaced from each other along the wireless charging face (26a) and coming into contact with opposite side edges of a mobile terminal (M), respectively, to retain the mobile terminal (M). Each retainer (28) is rotatable about a rotation shaft (32) extending along the vehicle length at an upper end of the retainer (28). A lower end of each retainer (28) is urged toward the opposite retainer (28) by an elastic force of a helical torsion spring (36).

## Description

### CROSS REFERENCE TO RELATED APPLICATION

This application claims priority to Japanese Patent Application No. 2021-136623 filed on August 24, 2021, which is incorporated herein by reference in its entirety including the specification, claims, drawings, and abstract, and to which the person of the art can refer to when considering the present disclosure.

### TECHNICAL FIELD

The present specification discloses a mobile terminal holder structure.

### BACKGROUND

Wireless chargers or contactless chargers capable of charging mobile terminals such as smartphones and tablet terminals without using cables have been known. To charge a mobile terminal with a wireless charger, it is necessary to retain the mobile terminal adjacent to or in contact with a wireless charging face of the wireless charger.

In this regard, mobile terminal holder structures that retain a mobile terminal adjacent to a wireless charging face have been proposed. JP 2020-55360 A, for example, discloses a mobile terminal holder structure disposed within a vehicle. The mobile terminal holder structure includes a storage space having an upward opening, a power feeding coil disposed outside side walls of the storage space for wireless power feeding, and a pair of supports to sandwich and retain the mobile terminal stored within the storage space. The pair of supports are movable toward or away from each other.

To use the mobile terminal that is being charged or has been fully charged by wireless charging, a user would remove the mobile terminal out of the mobile terminal holder structure. A mobile terminal holder structure that allows the user to easily remove the mobile terminal is therefore desirable.

Embodiments of the mobile terminal holder structure of the disclosure are therefore aimed toward further facilitating removal of a mobile terminal retained by the mobile terminal holder structure.

### SUMMARY

In accordance with an aspect of the disclosure, the mobile terminal holder structure includes a wireless charging face extending upright, and a pair of retainers spaced from each other horizontally along the wireless charging face. The retainers are configured to retain a mobile terminal to be disposed between the retainers from above, with the retainers being in contact with respective opposite side edges of the mobile terminal. Each of the retainers is rotatable about a rotation shaft extending in a direction perpendicular to the wireless charging face at an upper end of the retainer, and a lower end of each of the retainers is urged toward an opposite one of the retainers.

The retainers hold or retain the respective opposite side edges of the mobile terminal with an urging force applied through the retainers. In a retaining state wherein the pair of retainers retain the mobile terminal, the urging force from the retainers continues to be applied to the mobile terminal while the mobile terminal is being removed upward by the user. Each retainer is urged to rotate about the rotation shaft disposed at the upper end of the retainer. This rotating force is directed further upward with respect to the horizontal direction and thus contains an upward component. Thus, in removing the mobile terminal upward by the user, this upward component of the force applied from the pair of retainers to the mobile terminal assists the upward movement of the mobile terminal. This facilitates removal of the mobile terminal retained by the mobile terminal holder structure.

In a retaining state wherein a lower end of the mobile terminal is in contact with a bottom face of a storage unit configured to store the mobile terminal, and the mobile terminal is retained by the pair of retainers, the lower end of each of the retainers may be in contact with corresponding one of opposite side edges of the mobile terminal.

This configuration allows the retainers to contact with the lowest possible parts of the respective opposite side edges of the mobile terminal to hold the mobile terminal in the retaining state. The user may sometimes push the upper end of the mobile terminal away from the wireless charging face to thereby remove the mobile terminal held by the mobile terminal holder structure. In response to a force applied by the user to the upper end of the mobile terminal to push the mobile terminal away from the wireless charging face, the mobile terminal rotates about the lower end of the mobile terminal contacting the bottom face of the storage unit. This further moves portions of the mobile terminal retained by the pair of retainers toward the direction away from the wireless charging face, thereby releasing the mobile terminal from the pair of retainers. The user subsequently pulls the mobile terminal upward. When the user pushes the upper end of the mobile terminal away from the wireless charging face, the lever principle applies, with the upper end of the mobile terminal to which the user applies a force being a point of effort, the lower end of the mobile terminal in contact with the bottom face of the storage unit being a fulcrum, and a location of the mobile terminal in contact with the retainer being a point of load. A force of predetermined or greater strength applied to the point of load causes the mobile terminal to rotate about the fulcrum, and subsequently releases the mobile terminal from the pair of retainers. As, in the retaining state, the lower ends of the respective retainers are in contact with the lowest possible portions of the respective opposite side edges of the mobile terminal, the distance between the fulcrum and the point of load is reduced, which in turn reduces the force which must be applied to the point of effort in order for a forced for rotating the mobile terminal about the fulcrum to have an effect on the point of load; the user is therefore able to more easily remove the mobile terminal from the mobile terminal holder structure.

Each of the retainers may have a slope face facing the wireless charging face and the opposite one of the retainers. Each slope face is in contact with a corresponding one of the opposite side edges of the mobile terminal in the retaining state.

This configuration allows the mobile terminal to receive, from the slope faces of the retainers, a force directed toward the wireless charging face, and to be urged toward the wireless charging face. The mobile terminal can thus be charged while being held in secure contact with the wireless charging face.

The slope face of each of the retainers may face further upward in a non-retaining state, and a lower end of each of the opposite side edges of the mobile terminal may come into contact with the slope face before the mobile terminal inserted from upward reaches the retaining state.

Insertion of the mobile terminal between the retainers from above may first bring the lower ends of the opposite side edges of the mobile terminal into contact with the respective slope faces before the retaining state is achieved. The slope faces of the retainers each facing upward and the opposite retainer in the non-retaining state apply, to the mobile terminal, a force directed toward the horizontal center of the wireless charging face along the wireless charging face. This force applied from the slope faces of the retainers urges the mobile terminal toward the horizontal center of the wireless charging face along the wireless charging face. The retaining state is thus created with the mobile terminal being urged toward the center of the wireless charging face, which enables the mobile terminal to be wirelessly charged more reliably.

After the mobile terminal inserted from above comes into contact with the slope faces of the respective retainers, the mobile terminal is nudged downward by a force applied by the user while pushing open the pair of retainers, that is, while receiving a reaction from the retainers caused by the urging force of the retainers. In the non-retaining state, the slope face faces the opposite retainer and upward, and therefore each retainer protrudes further toward the opposite retainer as it extends downward. This configuration can bring the lower ends of the opposite side edges of the mobile terminal that are moving downward into contact with the lower possible portions of the slope faces. This can reduce the distance the mobile terminal moves while receiving the reaction from the pair of retainers until the mobile terminal comes into contact with the bottom face of the storage unit, that is, until the retaining state is achieved, allowing the user to place the mobile terminal into the retaining state with less force.

The wireless charging face is a front face of a recess portion disposed on a top face of a center console of a vehicle, and the pair of retainers may be disposed within the recess portion.

This configuration further facilitates removal of the mobile terminal retained by the pair of retainers within the recess disposed on the top face of the center console in the vehicle.

The mobile terminal holder structure disclosed in the specification further facilitates removal of the mobile terminal held by the mobile terminal holder structure.

### BRIEF DESCRIPTION OF DRAWINGS

Embodiments of the present disclosure will be described based on the following figures, wherein:
FIG. 1 is a perspective view of the outer appearance of a center console;
FIG. 2 is an exploded perspective view of a mobile terminal holder structure according to the present embodiment;
FIG. 3 is a perspective view of a retainer;
FIG. 4 is a perspective view of the mobile terminal holder structure;
FIG. 5 is an XY cross sectional view of the mobile terminal holder structure;
FIG. 6 is an XZ cross sectional view of the mobile terminal holder structure; and
FIG. 7 is a YZ cross sectional view of the mobile terminal holder structure.

### DESCRIPTION OF EMBODIMENTS

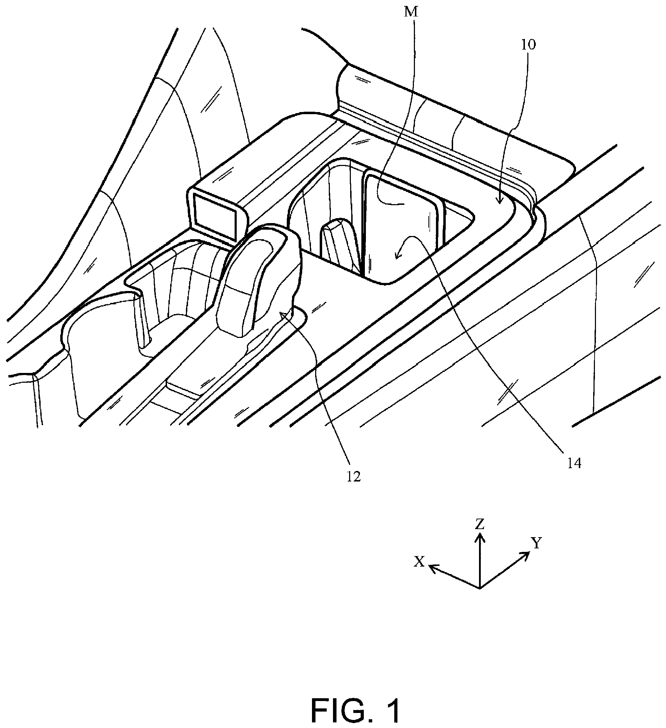

FIG. 1 is a perspective view of the outer appearance of a center console 10 of a vehicle, one including a mobile terminal holder structure according to the present embodiment. In each of the drawings, an X-axis indicates a direction along the vehicle width, a Y-axis indicates a direction along the vehicle length (the forward direction of Y-axis indicates the front), and a Z-axis indicates a direction along the vehicle height. In the specification, right and left refer to right and left when facing forward.

The center console 10 is part of an interior equipment disposed between right and left front seats, and includes a shift lever 12 and a storage portion 14 disposed before the shift lever 12. The storage portion 14 is a recess on the top face of the center console 10. The storage portion 14 can store various items, and is particularly configured to store a mobile terminal M such as a smartphone or a tablet terminal. As will be described below, a wireless charger or a contactless charger is disposed adjacent and in front of the storage portion 14, and the mobile terminal M disposed adjacent to a front wall of the storage portion 14 can be charged wirelessly.

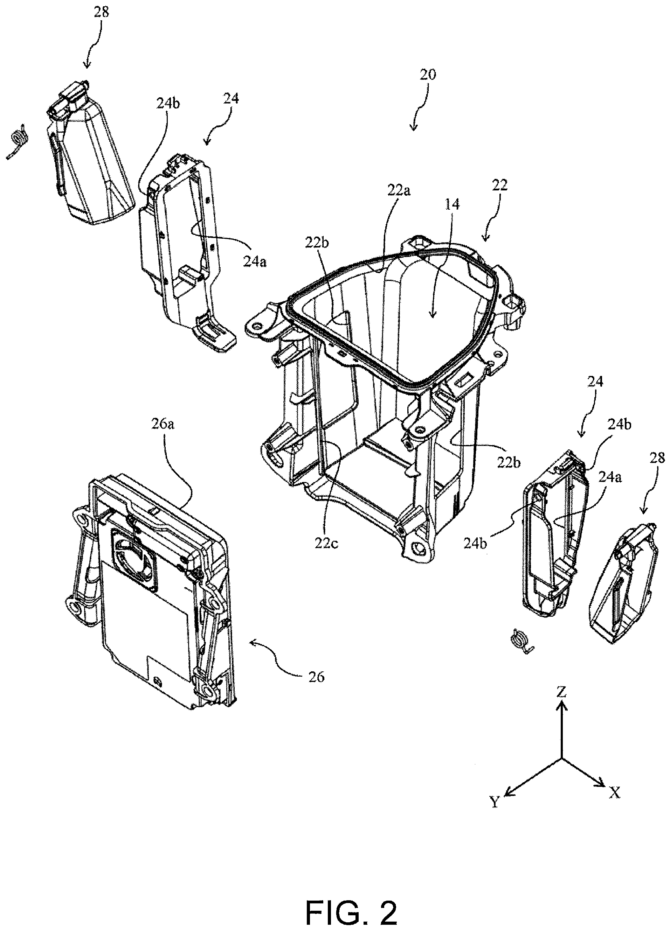

FIG. 2 is an exploded perspective view of a mobile terminal holder structure 20 according to the present embodiment. In FIG. 2, the forward direction along the Y-axis toward the lower left on the sheet indicates the front of the vehicle, which is opposite the direction shown in FIG. 1. The mobile terminal holder structure 20 includes a body frame 22, a pair of cover members 24, a wireless charger 26, and a pair of retainers 28. In the present embodiment, the mobile terminal holder structure 20 is embedded within the center console 10.

The body frame 22 includes a bottom face and side walls, and has a shape of a container having an opening 22a opened upward. The body frame 22 has an inner space defining the storage portion 14. In addition to the mobile terminal M, various other items are to be stored in the inner space of the body frame 22. The opposite side walls on the right and left of the body frame 22 each have a vertically elongated opening 22b having a substantially rectangular shape. In the present embodiment in particular, these openings 22b have the same height and are disposed in immediate vicinity of a front wall of the body frame 22. Each opening 22b is a hole through which the retainer 28 is able to pass. The front wall of the body frame 22 has an opening 22c into which the wireless charger 26 having a wireless charging face 26a is fitted.

The cover members 24 are mounted outside the respective right and left side walls of the body frame 22. Each cover member 24 has an opening 24a having the same shape as the opening 22b of the corresponding side wall of the body frame 22, and is attached to the body frame 22 such that the opening 22b and the opening 24a are aligned. Each cover member 24 further includes a pair of shaft fitting holes 24b arranged along the length of the vehicle on the upper end of the cover member 24. The shaft fitting holes 24b are configured to receive the retainer 28, as will be described below.

The wireless charger 26 includes a power transmission coil, for example. The wireless charger 26 is capable of charging the mobile terminal M wirelessly through electromagnetic induction, without connecting to the mobile terminal M via a cable. The wireless charging method may be a method other than electromagnetic induction, such as a laser method or a microwave method. The wireless charger 26 has a wireless charging face 26a having an outer shape corresponding to the shape of the opening 22c of the body frame 22, and is mounted on the body frame 22 by fitting the wireless charging face 26a into the opening 22c. In this mounted state, the inner face of the body frame 22 is flush with the wireless charging face 26a. As such, part of the inner face of the body frame 22 or the inner face of the storage portion 14 serves as the wireless charging face 26a. In the present embodiment, the front inner face of the storage portion 14 substantially entirely serves as the wireless charging face 26a that is an upright plane substantially normal to the length direction of the vehicle (Y-axis direction). Alternatively, the wireless charger 26 may be disposed at the back of the body frame 22 (storage portion 14) with the opening 22c being disposed on a rear side wall of the body frame 22 and the rear inner face of the storage portion 14 serving as the wireless charging face 26a.

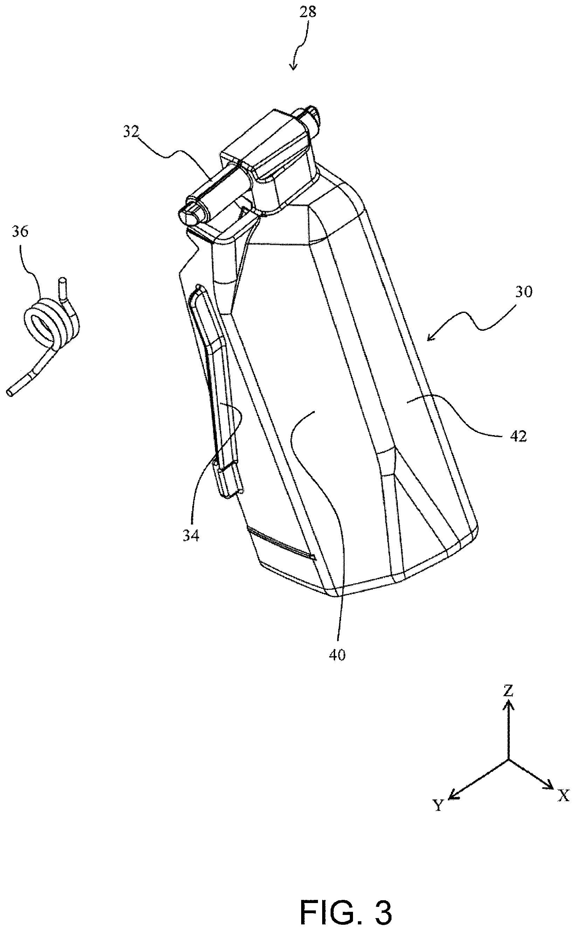

The retainers 28 are fitted in the right and left cover members 24, respectively. The right and left retainers 28 are symmetrical and have an identical shape. FIG. 3 is a perspective view of the right retainer 28. In the following description, terms referring to directions refer to the directions in a state wherein the retainer 28 is fitted in the cover member 24. Each retainer 28 includes a protrusion 30 protruding into the storage portion 14 through the opening 22b of the body frame 22 and the opening 24a of the cover member 24, a rotation shaft 32 extending along the length of the vehicle at the upper end of the retainer 28, and a pair of flanges 34 including a front flange 34 protruding forward from the front side face of the retainer 28 at a location further outward with respect to the protrusion 30 or further away from the body frame 22 with respect to the protrusion 30, and a rear flange (not shown) protruding rearward from the rear side face of the retainer 28 at a location further outward with respect to the protrusion 30.

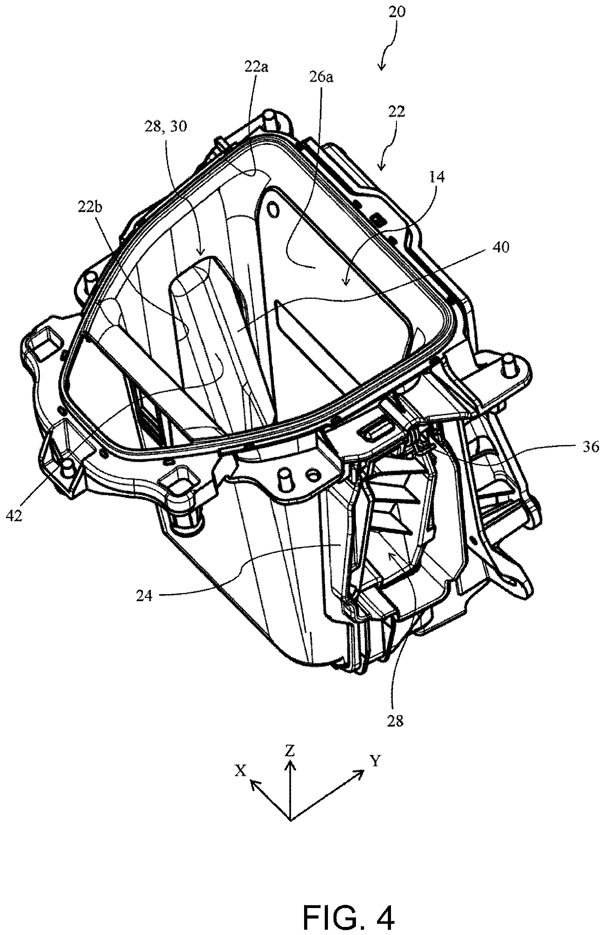

FIG. 4 is a perspective view of the mobile terminal holder structure 20 in a mounted state wherein the pair of cover members 24, the wireless charger 26, and the pair of retainers 28 are mounted on the body frame 22. In FIG. 4, the front of the vehicle is towards the upper right of the drawing. Referring to FIG. 3 and FIG. 4, the pair of retainers 28 in the mounted state will be described.

Each retainer 28 is mounted on the cover member 24. Specifically, the right retainer 28 is mounted on the right cover member 24 by inserting the rotation shaft 32 of the right retainer 28 through the pair of shaft fitting holes 24b of the right cover member 24, and the left retainer 28 is similarly mounted on the left cover member 24. The cover members 24 are to be mounted on the body frame 22, as described above, and the retainers 28 fitted in the respective cover members 24 are to be mounted on the body frame 22 via the cover members 24.

In the mounted state, the protrusion 30 of each retainer 28 protrudes into the storage portion 14 through the opening 22b on the right or left side wall of the body frame 22 and the opening 24a of the corresponding cover member 24. As the openings 22b are disposed at the same level as and in immediate vicinity of the front wall of the body frame 22 or the wireless charging face 26a as described above, in the mounted state, the pair of retainers 28 (that is, the protrusions 30) are separate from each other horizontally along the wireless charging face 26a within the storage portion 14.

As described above, each retainer 28 is mounted on the cover member 24, with the rotation shaft 32 extending along the length of the vehicle or in the direction normal to the wireless charging face 26a on the upper end of the retainer 28, passing through the pair of shaft fitting holes 24b of the cover member 24 arranged along the vehicle length. Each retainer 28 is thus mounted on the cover member 24 so as to be rotatable about the rotation shaft 32 in an XZ plane or parallel to the wireless charging face 26a. Specifically, as the rotation shaft 32 is disposed at the upper end of the retainer 28, the retainers 28 are rotatable such that the lower ends of the retainers 28 or the protrusions 30 of the retainers 28 move closer to or away from each other. The retainer 28 may be mounted on the cover member 24 in any manner that enables the retainer 28 to rotate about the rotation shaft 32 in the XZ plane. Each retainer 28 may be mounted directly on the body frame 22, not via the cover member 24, so as to be rotatable about the rotation shaft 32 in the XZ plane.

The lower end of one retainer 28 is urged toward the opposite retainer 28. In this embodiment, a helical torsion spring 36 is attached to the rotation shaft 32 of each retainer 28, and each retainer 28 is urged by an elastic force of the helical torsion spring 36. However, each retainer 28 may be urged in another manner.

While the urging force of the helical torsion spring 36 urges the lower ends of the retainers 28 to rotate toward each other, further rotation of the retainer 28 is restricted by the pair of flanges 34 (see FIG. 3) disposed on the respective retainers 28, coming into contact with the edges of the openings 24a of the cover members 24. In the present specification, a state wherein the flange 34 is in contact with the edge of the opening 24a, or a state wherein the retainer 28 protrudes furthest into the storage portion 14, will be referred to as a non-retaining state. Application of a force greater than the urging force of the helical torsion spring 36 to each retainer 28 from the interior of the storage portion 14 would rotate the lower end of one retainer 28 outward (away from the opposite retainer 28).

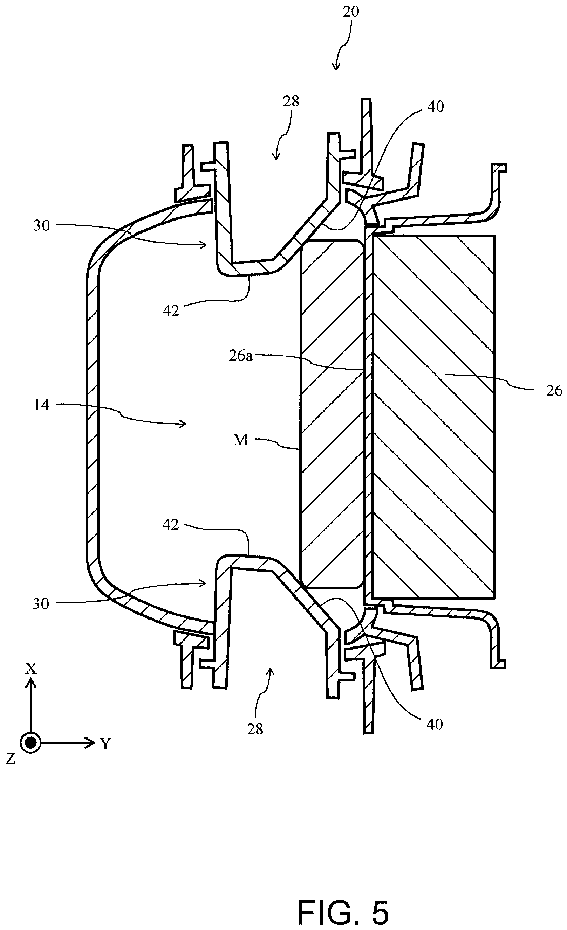

FIG. 5 is an XY (horizontal) cross sectional view of the mobile terminal holder structure 20. As illustrated in FIG. 5 (and FIG. 3 and FIG. 4), each retainer 28 may have a slope face 40 of the protrusion 30 adjacent to the wireless charging face 26a and facing the opposing retainer 28 and the wireless charging face 26a. As illustrated in FIG. 3 and FIG. 4, the slope face 40 extends from the upper end to the lower end of the protrusion 30 and may face upward in the non-retaining state. The slope face 40 of each retainer 28 extending from the upper end to the lower end of the protrusion 30 and facing upward and the opposite retainer 28 in the non-retaining state, protrudes further inward of the storage portion 14 as the slope face 40 extends further downward in the non-retaining state. In other words, the horizontal distance between the slope faces 40 of the pair of retainers 28 is shorter as the slope faces 40 extend further downward. The protrusion 30 also includes a further slope face 42 connecting to a rear end, that is an end furthest from the wireless charging face 26a, of the slope face 40, and extending from the upper end to the lower end of the protrusion 30 and facing upward and the opposite retainer 28 in the non-retaining state.

Operation of the mobile terminal holder structure 20 according to the present embodiment that is summarized above will now be described below.

Referring to FIG. 4 and FIG. 5, the user first places the mobile terminal M into the storage portion 14 from above through the opening 22a of the body frame 22, or the opening of the storage portion 14. In particular, to charge the mobile terminal M with the wireless charger 26, the user places the mobile terminal M between the pair of retainers 28 from above into contact with the wireless charging faces 26a. The mobile terminal M is thus inserted by the user between the wireless charging face 26a and the protrusions 30, or particularly the slope faces 40 of the protrusions 30, along the vehicle length, as illustrated in FIG. 5.

Insertion of the mobile terminal M as described above first brings the lower ends of the opposite side edges of the mobile terminal M into contact with the respective slope faces 40, before a retaining state, which will be described below, is achieved. As described above, in this embodiment, the slope face 40 in the non-retaining state faces upward and the opposite retainer 28. This allows the mobile terminal M to receive a force directed toward the center of the storage portion 14 along the vehicle width from the slope faces 40 of the pair of retainers 28, and this force moves the mobile terminal M toward the center of the storage portion 14 along the vehicle width. In this embodiment, substantially the entire front inner face of the storage portion 14 corresponds to the wireless charging face 26a, as described above. In this configuration, moving the mobile terminal M toward the center of the storage portion 14 along the vehicle width means moving the mobile terminal M toward the center of the wireless charging face 26a along the vehicle width. The retainers 28 each having a slope face 40 facing upward and the opposite retainer 28 as described above provide a centering function to move the mobile terminal M toward the center of the storage portion 14, that is, the center of the wireless charging face 26a, along the vehicle width. The mobile terminal M having been moved toward the center of the wireless charging face 26a faces the wireless charging face 26a, which enables more reliable charging of the mobile terminal M.

Meanwhile, each retainer 28 receives a force from the mobile terminal M to rotate such that the lower end of the retainer 28 moves outward, that is, away from the opposite retainer 28. The mobile terminal M is thus moved downward by a force applied from the user while pushing open the pair of retainers 28 or receiving a reaction force by the elastic force of the helical torsion spring 36 from the pair of retainers 28. In this embodiment, the slope face 40 of the retainer 28 that is a contact face with the mobile terminal M in the non-retaining state protrudes further inward of the storage portion 14 as the slope face 40 extends downward. This configuration of the retainer 28 can bring the lower ends of the opposite side edges of the mobile terminal M into contact with further lower portions of the slope face 40. Such a configuration allowing the mobile terminal M to contact the further lower locations of the slope face 40 shortens the distance the mobile terminal M moves while receiving the reaction force from the pair of retainers 28 until the mobile terminal M comes into contact with the bottom face of the storage portion 14, that is, the distance until the retaining state is achieved. This configuration enables the user to insert the mobile terminal M into the storage portion 14 using less force.

Insertion of the mobile terminal M into the storage portion 14 by the user until the lower end of the mobile terminal M comes into contact with the bottom face of the storage portion 14 establishes the retaining state wherein the pair of retainers 28 hold the mobile terminal M.

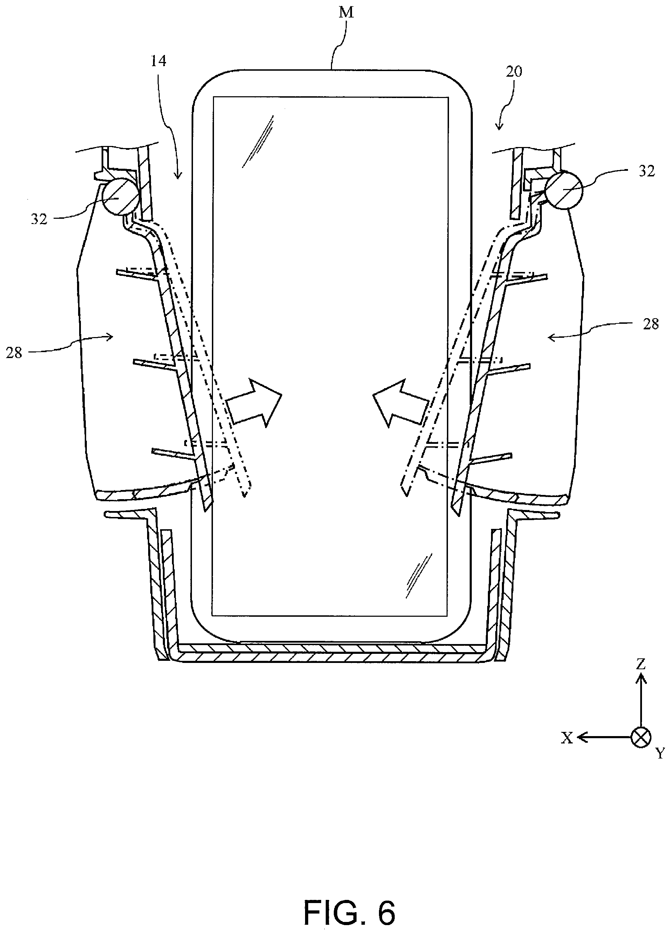

FIG. 6 is an XZ cross sectional view of the mobile terminal holder structure 20 showing the retaining state. In the retaining state, the retainers 28 are in contact with the respective opposite side edges of the mobile terminal M. In the retaining state, the elastic force of the helical torsion spring 36 imparts a force on the retainers 28 for moving the lower ends of the retainers 28 toward each other, that is, a force of the retainers 28 for sandwiching the mobile terminal M, and this force allows the pair of retainers 28 to provide a retaining function to retain the mobile terminal M.

In this embodiment, in the retaining state, the slope face 40 of the protrusion 30 of each retainer 28, which faces the opposite retainer 28 and the wireless charging face 26a, is in contact with the corresponding side edge of the mobile terminal M (see FIG. 5). The mobile terminal M, in this state, receives a force toward the wireless charging face 26a from the slope faces 40 of the pair of retainers 28 and is urged toward the wireless charging face 26a. The retainers 28 each having a slope face 40 facing the opposite retainer 28 and the wireless charging face 26a thus provide a pressing function to press the mobile terminal M onto the wireless charging face 26a. The mobile terminal M that is securely retained in contact with the wireless charging face 26a is charged.

In this embodiment, the slope face 40 of each retainer 28 facing upward and the opposite retainer 28 in the non-retaining state is a contact face to contact with the mobile terminal M, and each retainer 28 rotates about the rotation shaft 32 disposed at the upper end of the retainer 28. This configuration allows the retainer 28, or particularly the lower end of the slope face 40, to come into contact with the mobile terminal M in the retaining state, as illustrated in FIG. 6. More specifically, the pair of retainers 28 are in contact with the lowest possible portions of the opposite side edges, respectively, of the mobile terminal M.

To use the mobile terminal M retained by the mobile terminal holder structure 20 in the storage portion 14, the user may remove the mobile terminal M out of the storage portion 14 according to one of two possible methods of removing the mobile terminal M from the storage portion 14.

In the first method, the user pulls the mobile terminal M upward from the storage portion 14. As described above, the pair of retainers 28 are urged by the elastic force of the helical torsion spring 36 to rotate about the rotation shaft 32 such that the lower ends of the respective retainers 28 move toward each other. The mobile terminal M therefore receives a force directing as indicated by arrows in FIG. 6 from the pair of retainers 28 while contacting these retainers 28. As illustrated in FIG. 6, the above-described force applied from the retainers 28 to the mobile terminal M is a force directing upward with respect to the horizontal direction, and therefore has an upward component. This upward component of the force applied to the mobile terminal M from the pair of retainers 28 assists the upward movement of the mobile terminal M during the user's pulling the mobile terminal M upward, thereby facilitating removal of the mobile terminal M upward by the user.

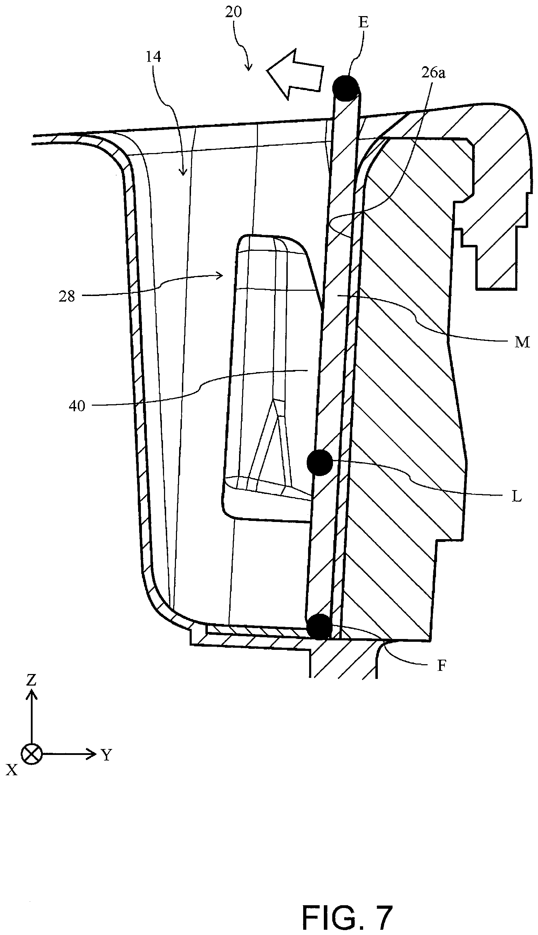

FIG. 7 is a YZ cross sectional view of the mobile terminal holder structure 20 showing the retaining state. In the second method of removing the mobile terminal M out of the storage portion 14, the user presses the upper end of the mobile terminal M rearward (away from the wireless charging face 26a, as indicated by arrow in FIG. 7). Application of the rearward force to the upper end of the mobile terminal M by the user causes rotation of the mobile terminal M about the lower end of the mobile terminal M in a YZ plane. This allows the portions of the mobile terminal M retained by the respective retainers 28, that is, the portions of the mobile terminal M in contact with the respective slope faces 40, to move rearward, thereby releasing the mobile terminal M from the pair of retainers 28. The user then pulls the mobile terminal M upward.

Lever principles apply to the pushing of the upper end of the mobile terminal M, with the upper end of the mobile terminal M to which the user applies the force being a point of effort E, the lower end of the mobile terminal M in contact with the bottom face of the storage portion 14 being a fulcrum F, and the location of the mobile terminal M contacting the slope face 40 being a point of load L. In response to a force of predetermined or greater strength applied to the point of load L, the mobile terminal M starts to rotate about the fulcrum F to subsequently release the retention of the mobile terminal M by the pair of retainers 28. As described above, in the retaining state, the lower ends of the slope faces 40 of the pair of retainers 28 are in contact with the mobile terminal M such that the retainers 28 respectively contact the lowest possible locations of the opposite side edges of the mobile terminal M. This shortens the distance between the fulcrum F and the point of load L and thus reduces the necessary amount of force to be applied to the point of effort E to allow the force required for rotating the mobile terminal M about the fulcrum F to work on the point of load L. This configuration enables the user to remove the mobile terminal M from the mobile terminal holder structure 20 more easily.

The mobile terminal holder structure according to the disclosure is not limited to the embodiment described above, and various modifications may be made within the scope of the disclosure.

For example, while in the above example, the mobile terminal holder structure 20 is disposed in the center console 10, the mobile terminal holder structure 20 may be disposed in other locations.

## Claims

1. A mobile terminal holder structure comprising:
a wireless charging face (26a) extending upright; and
a pair of retainers (28) spaced from each other horizontally along the wireless charging face (26a), the retainers (28) being configured to retain a mobile terminal (M) to be disposed between the retainers (28) from above, with the retainers (28) being in contact with opposite side edges of the mobile terminal (M), respectively, wherein
each of the retainers (28) is rotatable about a rotation shaft (32) extending in a direction normal to the wireless charging face (26a) at an upper end of the retainer (28), and a lower end of each of the retainers (28) is urged toward an opposite one of the retainers (28).

2. The mobile terminal holder structure according to claim 1, further comprising:
a storage unit (14) configured to store the mobile terminal (M), wherein
in a retaining state wherein a lower end of the mobile terminal (M) is in contact with a bottom face of the storage unit (14) and the mobile terminal (M) is retained by the pair of retainers (28), the lower end of each of the retainers (28) is in contact with corresponding one of opposite side edges of the mobile terminal (M).

3. The mobile terminal holder structure according to claim 1, wherein
each of the retainers (28) comprises a slope face (40) facing the wireless charging face (26a) and the opposite one of the retainers (28), the slope face (40) being in contact with a corresponding one of the opposite side edges of the mobile terminal (M) in the retaining state.

4. The mobile terminal holder structure according to claim 3, wherein
the slope face (40) of each of the retainers (28) faces further upward in a non-retaining state, and
a lower end of each of the opposite side edges of the mobile terminal (M) comes into contact with the slope face (40) before the mobile terminal (M) inserted from upward reaches the retaining state.

5. The mobile terminal holder structure according to any one of claims 1 to 4, wherein
the wireless charging face (26a) is a front face of a recess portion configured to be disposed on a top face of a center console (10) of a vehicle, and
the pair of retainers (28) is disposed within the recess portion.
